# EUROPEAN PATENT APPLICATION

(11) **EP 4 664 302 A1**
(43) Date of publication of application: **17.12.2025**
(21) Application number: 24759523.4
(22) Date of filing: 02.02.2024
(51) Int. Cl.: G06F 13/42

(54) **CHANNEL-ASSOCIATED INFORMATION TRANSMISSION METHOD AND APPARATUS, AND DEVICE**

(30) Priority: 21.02.2023 CN 202310180147
(71) Applicant: Huawei Technologies Co., Ltd., Shenzhen, Guangdong 518129 (CN)
(72) Inventor: XU, Minchao, Shenzhen, Guangdong 518129 (CN); SU, Jie, Shenzhen, Guangdong 518129 (CN)
(74) Representative: Gill Jennings & Every LLP
(86) International application number: PCT/CN2024/075556
(87) International publication number: WO 2024/174846

(57) **Abstract**

A channel-associated information transfer method and apparatus, and a device are provided, and relate to the field of storage technologies, to provide a transfer mechanism applied to channel-associated information of data of a UFS. The method includes: A UFS device sends a first ready-to-transfer frame to a host, where the first ready-to-transfer frame indicates to transfer first target data, the first ready-to-transfer frame includes channel-associated control information, and the channel-associated control information is used to control transfer of first channel-associated information of the first target data; when the host receives the first ready-to-transfer frame, the host sends a first data frame to the UFS device, where the first data frame includes the first target data and the first channel-associated information; and the UFS device receives the first data frame. In this way, the host and the UFS device can implement transfer of data and channel-associated information of the data in one write operation, thereby implementing efficient transfer of the channel-associated information of the data.

## Description

This application claims priority to Chinese Patent Application No. 202310180147.2, filed with the China National Intellectual Property Administration on February 21, 2023 and entitled "CHANNEL-ASSOCIATED INFORMATION TRANSFER METHOD AND APPARATUS, AND DEVICE", which is incorporated herein by reference in its entirety.

### TECHNICAL FIELD

This application relates to the field of storage technologies, and in particular, to a channel-associated information transfer method and apparatus, and a device.

### BACKGROUND

A universal flash storage (universal flash storage, UFS) is a high-performance serial interface, and may be used to design an application that requires minimum power consumption, for example, an application of a mobile system like a smartphone or a tablet computer, and an application of a vehicle. A high-speed serial interface and an optimization protocol of the UFS can significantly improve throughput and system performance. In recent years, a plurality of UFS protocols such as UFS 1.0, UFS 2.0, UFS 3.0, and UFS 3.1 have been successively launched, and UFS-based storage devices have been widely used in a plurality of fields such as mobile phones, tablets, and surveillance.

With rapid development of a UFS technology, people impose higher requirements on data security. Especially in the in-vehicle field, end-to-end data security needs to be constructed by using channel-associated information, to implement end-to-end data protection. However, a current UFS protocol does not provide a mechanism for transferring channel-associated information of data, thereby limiting use and efficiency of the UFS.

### SUMMARY

This application provides a channel-associated information transfer method and apparatus, and a device, to provide a UFS protocol-based channel-associated information transfer mechanism, thereby resolving a problem of limited use and efficiency of a UFS in the conventional technology.

To achieve the foregoing objective, this application uses the following technical solutions.

According to a first aspect, a channel-associated information transfer method is provided. The method includes: A host receives a first ready-to-transfer frame from a UFS device, where the first ready-to-transfer frame indicates to transfer first target data, the first ready-to-transfer frame includes channel-associated control information, for example, the first ready-to-transfer frame may be an RTT UPIU, and the channel-associated control information is used to control transfer of first channel-associated information of the first target data, for example, used to control a transfer mode of the first channel-associated information; and the host sends a first data frame to the UFS device, where the first data frame includes the first target data and the first channel-associated information, and the first channel-associated information may be transferred in a transfer mode indicated by the channel-associated control information.

In the foregoing technical solution, when receiving the first ready-to-transfer frame from the UFS device, the host may send, to the UFS device based on the channel-associated control information carried in the first ready-to-transfer frame, the first data frame that carries the first target data and the first channel-associated information, so that the UFS device may receive the first data frame. In this way, the host and the UFS device may complete transfer of data and channel-associated information in a same write I/O, a delay of a write operation is not increased, and no additional signaling is required, so that a problem of limited use and efficiency of the UFS in the conventional technology is resolved, and efficient transfer of channel-associated information of data is implemented.

In a possible implementation of the first aspect, the method further includes: The host sends a write command frame to the UFS device, where the write command frame is used to request to write the first target data, and the write command frame includes the channel-associated control information; and the host receives a response frame from the UFS device, where the response frame is used to respond to the write command frame. In the foregoing possible implementation, the host may send, to the UFS device, the write command frame that carries the channel-associated control information, so that the UFS device performs corresponding buffer calculation when receiving the write command frame, send the ready-to-transfer frame to schedule corresponding target data and channel-associated information, and may further return the response frame to the host after transfer of data and channel-associated information is completed, to implement transfer of the data and the channel-associated information in a same write I/O.

In a possible implementation of the first aspect, the write command frame is further used to request to write second target data, and the method further includes: The host receives a second ready-to-transfer frame from the UFS device, where the second ready-to-transfer frame indicates to transfer the second target data, the second ready-to-transfer frame includes the channel-associated control information, and the channel-associated control information is further used to control transfer of second channel-associated information of the second target data; and the host sends a second data frame to the UFS device, where the second data information frame includes the second target data and the second channel-associated information. In the foregoing possible implementation, when a total data volume of target data that is expected to be transferred and that is indicated in the write command frame sent by the host to the UFS device is large, the UFS device may send a plurality of ready-to-transfer frames to the host after receiving the write command frame, where each ready-to-transfer frame may indicate to transfer a part of the target data. The host may alternatively send target data to the UFS device by using a corresponding quantity of data frames, to transfer, to the UFS device, all target data that is expected to be transferred. In the foregoing write operation process, the host and the UFS device can complete transfer of channel-associated information of all data in a same write I/O, and a delay of the write operation is not increased, so that a problem of limited use and efficiency of the UFS in the conventional technology is resolved, and efficient transfer of channel-associated information of data is implemented.

In a possible implementation of the first aspect, the frame (for example, a ready-to-transfer frame, a write command frame, and a data frame) includes a frame header, and the channel-associated control information is carried in a reserved field in the frame header. The data frame further includes a frame trailer, and target data and channel-associated information are carried in the frame trailer. Optionally, a length of the reserved field is two bytes. In the foregoing possible implementation, the channel-associated control information is carried in the reserved fields of the frame headers of the ready-to-transfer frame, the write command frame, and the data frame, so that utilization of the different frames can be improved, and signaling interaction between the host and the UFS device can be reduced.

In a possible implementation of the first aspect, the target data includes at least one data block, the channel-associated information includes at least one channel-associated information block, and the at least one data block one-to-one corresponds to the at least one channel-associated information block, where the channel-associated control information indicates at least one of the following information: a granularity of the data block, a granularity of the channel-associated information block, and an arrangement manner of the data block and the channel-associated information block. In the foregoing possible implementation, the channel-associated control information may indicate different information to control a transfer mode of the channel-associated information, so that the data and the channel-associated information are transferred in a same write I/O.

In a possible implementation of the first aspect, the arrangement manner of the data block and the channel-associated information block is one of the following: a plurality of data blocks plus a plurality of channel-associated information blocks, a plurality of channel-associated information blocks plus a plurality of data blocks, a single data block plus a single channel-associated information block, and a single channel-associated information block plus a single data block. In the foregoing possible implementation, flexibility and diversity of transferring data and channel-associated information can be improved.

According to a second aspect, a channel-associated information transfer method is provided. The method includes: A UFS device sends a first ready-to-transfer frame to a host, where the first ready-to-transfer frame indicates to transfer first target data, the first ready-to-transfer frame includes channel-associated control information, for example, the first ready-to-transfer frame may be an RTT UPIU, and the channel-associated control information is used to control transfer of first channel-associated information of the first target data, for example, used to control a transfer mode of the first channel-associated information; and the UFS device receives a first data frame from the host, where the first data frame includes the first target data and the first channel-associated information.

In the foregoing technical solution, when receiving the first ready-to-transfer frame from the UFS device, the host may send, to the UFS device based on the channel-associated control information carried in the first ready-to-transfer frame, the first data frame that carries the first target data and the first channel-associated information, so that the UFS device may receive the first data frame. In this way, the host and the UFS device may complete transfer of data and channel-associated information in a same write I/O, a delay of a write operation is not increased, and no additional signaling is required, so that a problem of limited use and efficiency of the UFS in the conventional technology is resolved, and efficient transfer of channel-associated information of data is implemented.

In a possible implementation of the second aspect, the method further includes: The UFS device receives a write command frame from the host, where the write command frame is used to request to write the first target data, and the write command frame includes the channel-associated control information; and the UFS device sends a response frame to the host, where the response frame is used to respond to the write command frame. In the foregoing possible implementation, the host may send, to the UFS device, the write command frame that carries the channel-associated control information, so that the UFS device performs corresponding buffer calculation when receiving the write command frame, sends the ready-to-transfer frame to schedule corresponding target data and channel-associated information, and may further return the response frame to the host after transfer of data and channel-associated information is completed, to implement transfer of the data and the channel-associated information in a same write I/O.

In a possible implementation of the second aspect, the write command frame is further used to request to write second target data, and the method further includes: The UFS device sends a second ready-to-transfer frame to the host, where the second ready-to-transfer frame indicates to transfer the second target data, the second ready-to-transfer frame includes the channel-associated control information, and the channel-associated control information is further used to control transfer of second channel-associated information of the second target data; and the UFS device receives a second data frame from the host, where the second data information frame includes the second target data and the second channel-associated information. In the foregoing possible implementation, when a total data volume of target data that is expected to be transferred and that is indicated in the write command frame sent by the host to the UFS device is large, the UFS device may send a plurality of ready-to-transfer frames to the host after receiving the write command frame, where each ready-to-transfer frame may indicate to transfer a part of the target data. The host may alternatively send target data to the UFS device by using a corresponding quantity of data frames, to transfer, to the UFS device, all target data that is expected to be transferred. In the foregoing write operation process, the host and the UFS device can complete transfer of channel-associated information of all data in a same write I/O, and a delay of the write operation is not increased, so that a problem of limited use and efficiency of the UFS in the conventional technology is resolved, and efficient transfer of channel-associated information of data is implemented.

In a possible implementation of the second aspect, the frame (for example, a ready-to-transfer frame, a write command frame, and a data frame) includes a frame header, and the channel-associated control information is carried in a reserved field in the frame header. The data frame further includes a frame trailer, and target data and channel-associated information are carried in the frame trailer. Optionally, a length of the reserved field is two bytes. In the foregoing possible implementation, the channel-associated control information is carried in the reserved fields of the frame headers of the ready-to-transfer frame, the write command frame, and the data frame, so that utilization of the different frames can be improved, and signaling interaction between the host and the UFS device can be reduced.

In a possible implementation of the second aspect, the target data includes at least one data block, the channel-associated information includes at least one channel-associated information block, and the at least one data block one-to-one corresponds to the at least one channel-associated information block, where the channel-associated control information indicates at least one of the following information: a granularity of the data block, a granularity of the channel-associated information block, and an arrangement manner of the data block and the channel-associated information block. In the foregoing possible implementation, the channel-associated control information may indicate different information to control a transfer mode of the channel-associated information, so that the data and the channel-associated information are transferred in a same write I/O.

In a possible implementation of the second aspect, the arrangement manner of the data block and the channel-associated information block is one of the following: a plurality of data blocks plus a plurality of channel-associated information blocks, a plurality of channel-associated information blocks plus a plurality of data blocks, a single data block plus a single channel-associated information block, and a single channel-associated information block plus a single data block. In the foregoing possible implementation, flexibility and diversity of transferring data and channel-associated information can be improved.

According to a third aspect, a channel-associated information transfer apparatus is provided. The apparatus includes: a receiving unit, configured to receive a first ready-to-transfer frame from a universal flash storage UFS device, where the first ready-to-transfer frame indicates to transfer first target data, the first ready-to-transfer frame includes channel-associated control information, and the channel-associated control information is used to control transfer of first channel-associated information of the first target data; and a sending unit, configured to send a first data frame to the UFS device, where the first data frame includes the first target data and the first channel-associated information.

In a possible implementation of the third aspect, the sending unit is further configured to send a write command frame to the UFS device, where the write command frame is used to request to write the first target data, and the write command frame includes the channel-associated control information; and the receiving unit is further configured to receive a response frame from the UFS device, where the response frame is used to respond to the write command frame.

In a possible implementation of the third aspect, the write command frame is further used to request to write second target data; the receiving unit is further configured to receive a second ready-to-transfer frame from the UFS device, where the second ready-to-transfer frame indicates to transfer the second target data, the second ready-to-transfer frame includes the channel-associated control information, and the channel-associated control information is further used to control transfer of second channel-associated information of the second target data; and the sending unit is further configured to send a second data frame to the UFS device, where the second data information frame includes the second target data and the second channel-associated information.

In a possible implementation of the third aspect, the frame includes a frame header, and the channel-associated control information is carried in a reserved field in the frame header; and the data frame further includes a frame trailer, and target data and channel-associated information are carried in the frame trailer. Optionally, a length of the reserved field is two bytes.

In a possible implementation of the third aspect, the target data includes at least one data block, the channel-associated information includes at least one channel-associated information block, and the at least one data block one-to-one corresponds to the at least one channel-associated information block, where the channel-associated control information indicates at least one of the following information: a granularity of the data block, a granularity of the channel-associated information block, and an arrangement manner of the data block and the channel-associated information block.

In a possible implementation of the third aspect, the arrangement manner of the data block and the channel-associated information block is one of the following: a plurality of data blocks plus a plurality of channel-associated information blocks, a plurality of channel-associated information blocks plus a plurality of data blocks, a single data block plus a single channel-associated information block, and a single channel-associated information block plus a single data block.

According to a fourth aspect, a channel-associated information transfer apparatus is provided. The apparatus includes: a sending unit, configured to send a first ready-to-transfer frame to a host, where the first ready-to-transfer frame indicates to transfer first target data, the first ready-to-transfer frame includes channel-associated control information, and the channel-associated control information is used to control transfer of first channel-associated information of the first target data; and a receiving unit, configured to receive a first data frame from the host, where the first data frame includes the first target data and the first channel-associated information.

In a possible implementation of the fourth aspect, the receiving unit is further configured to receive a write command frame from the host, where the write command frame is used to request to write the first target data, and the write command frame includes the channel-associated control information; and the sending unit is further configured to send the first ready-to-transfer frame to the host, where the first ready-to-transfer frame indicates to transfer the first target data, and the first ready-to-transfer frame includes the channel-associated control information.

In a possible implementation of the fourth aspect, the write command frame is further used to request to write second target data; the sending unit is further configured to send a second ready-to-transfer frame to the host, where the second ready-to-transfer frame indicates to transfer the second target data, the second ready-to-transfer frame includes the channel-associated control information, and the channel-associated control information is further used to control transfer of second channel-associated information of the second target data; and the receiving unit is further configured to receive a second data frame from the host, where the second data information frame includes the second target data and the second channel-associated information.

In a possible implementation of the fourth aspect, the frame includes a frame header, and the channel-associated control information is carried in a reserved field in the frame header; and the data frame further includes a frame trailer, and target data and channel-associated information are carried in the frame trailer. Optionally, a length of the reserved field is two bytes.

In a possible implementation of the fourth aspect, the target data includes at least one data block, the channel-associated information includes at least one channel-associated information block, and the at least one data block one-to-one corresponds to the at least one channel-associated information block, where the channel-associated control information indicates at least one of the following information: a granularity of the data block, a granularity of the channel-associated information block, and an arrangement manner of the data block and the channel-associated information block.

In a possible implementation of the fourth aspect, the arrangement manner of the data block and the channel-associated information block is one of the following: a plurality of data blocks plus a plurality of channel-associated information blocks, a plurality of channel-associated information blocks plus a plurality of data blocks, a single data block plus a single channel-associated information block, and a single channel-associated information block plus a single data block.

According to a fifth aspect, a channel-associated information transfer apparatus is provided. The information transfer apparatus includes a processor and a memory. The memory stores instructions. When the processor runs the instructions, the apparatus is enabled to perform the method provided in any one of the first aspect or the possible implementations of the first aspect.

According to a sixth aspect, a channel-associated information transfer apparatus is provided. The information transfer apparatus includes a processor and a memory. The memory stores instructions. When the processor runs the instructions, the apparatus is enabled to perform the method provided in any one of the second aspect or the possible implementations of the second aspect.

According to another aspect of this application, an electronic device is provided. The electronic device includes a host and a UFS device that are coupled to each other. The host includes the apparatus provided in any one of the third aspect, the possible implementations of the third aspect, or the fifth aspect, and the UFS device includes the apparatus provided in any one of the fourth aspect, the possible implementations of the fourth aspect, or the sixth aspect.

According to still another aspect of this application, a computer-readable storage medium is provided. The computer-readable storage medium stores a computer program or instructions. When the computer program or the instructions are run, the method provided in any one of the first aspect or the possible implementations of the first aspect is implemented.

According to still another aspect of this application, a computer-readable storage medium is provided. The computer-readable storage medium stores a computer program or instructions. When the computer program or the instructions are run, the method provided in any one of the second aspect or the possible implementations of the second aspect is implemented.

According to still another aspect of this application, a computer program product is provided. The computer program product includes a computer program (which may also be referred to as code or instructions). When the computer program is run, a computer is enabled to perform the method provided in any one of the first aspect or the possible implementations of the first aspect.

According to still another aspect of this application, a computer program product is provided. The computer program product includes a computer program (which may also be referred to as code or instructions). When the computer program is run, a computer is enabled to perform the method provided in any one of the second aspect or the possible implementations of the second aspect.

It may be understood that an apparatus of any channel-associated information transfer method provided above, the electronic device, the computer-readable storage medium all include content of the channel-associated information transfer method provided above. Therefore, for beneficial effects that can be achieved, refer to the beneficial effects in the channel-associated information transfer method provided above. Details are not described herein again.

### BRIEF DESCRIPTION OF DRAWINGS

FIG. 1 is a diagram of a structure of a UFS system according to an embodiment of this application;
FIG. 2 is a diagram of performing a SCSI write operation between a host and a UFS device according to an embodiment of this application;
FIG. 3 is a diagram of a CMD UPIU according to an embodiment of this application;
FIG. 4 is a diagram of an RTT UPIU according to an embodiment of this application;
FIG. 5 is a diagram of a data out UPIU according to an embodiment of this application;
FIG. 6 is a diagram of transferring channel-associated information through an EHS according to an embodiment of this application;
FIG. 7 is a schematic flowchart of a channel-associated information transfer method according to an embodiment of this application;
FIG. 8 is a diagram in which an RTT UPIU carries channel-associated control information according to an embodiment of this application;
FIG. 9 is a diagram of transferring channel-associated information through a data out UPIU according to an embodiment of this application;
FIG. 10 is another diagram of transferring channel-associated information through a data out UPIU according to an embodiment of this application;
FIG. 11 is another diagram of transferring channel-associated information through a data out UPIU according to an embodiment of this application;
FIG. 12 is another diagram of transferring channel-associated information through a data out UPIU according to an embodiment of this application;
FIG. 13 is a diagram in which a CMD UPIU carries channel-associated control information according to an embodiment of this application;
FIG. 14 is another schematic flowchart of a channel-associated information transfer method according to an embodiment of this application;
FIG. 15 is a diagram of transferring channel-associated information according to an embodiment of this application;
FIG. 16 is a diagram of a structure of a UFS system according to an embodiment of this application;
FIG. 17 is a diagram of a structure of a host according to an embodiment of this application;
FIG. 18 is another diagram of a structure of a host according to an embodiment of this application;
FIG. 19 is a diagram of a structure of a UFS device according to an embodiment of this application; and
FIG. 20 is another diagram of a structure of a UFS device according to an embodiment of this application.

### DESCRIPTION OF EMBODIMENTS

The making and use of embodiments are discussed in detail below. It should be appreciated, however, that a plurality of applicable inventive concepts provided in this application may be implemented in a plurality of specific environments. The specific embodiments discussed are merely illustrative of specific ways to implement and use this description and this technology, and do not limit the scope of this application.

Unless otherwise defined, all technical terms used herein have the same meaning as those commonly known to a person of ordinary skill in the art.

Circuits or other components may be described as or referred to as "configured to" perform one or more tasks. In this case, the term "configured to" is used for implying a structure by indicating that a circuit/component includes a structure (for example, a circuit system) that performs one or more tasks during operation. Therefore, even when a specified circuit/component is currently not operable (for example, not turned on), the circuit/component may also be referred to as being configured to perform the task. Circuits/components used in conjunction with the "configured to" phrase include hardware, for example, a circuit for performing an operation.

The following describes the technical solutions in embodiments of this application with reference to the accompanying drawings in embodiments of this application. In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one of a, b, or c may represent: a, b, c, a and b, a and c, b and c, or a, b, and c, where a, b, and c may be singular or plural.

In embodiments of this application, words such as "first" and "second" are used to distinguish between objects with similar names or functions or effects. A person skilled in the art may understand that the words such as "first" and "second" do not limit a quantity and an execution sequence. The term "coupling" is used for representing an electrical connection, including a direct connection through a wire or a connection end or an indirect connection through another device. Therefore, "coupling" should be considered as a generalized electronic communication connection.

It should be noted that, in this application, the word such as "example" or "for example" represents giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

A universal flash storage (universal flash storage, UFS) is a high-performance serial interface, and may be used to design an application that requires minimum power consumption, for example, an application of a mobile system like a smartphone or a tablet computer, and an application of a vehicle. A high-speed serial interface and an optimization protocol of the UFS can significantly improve throughput and system performance. In recent years, a plurality of UFS protocols such as UFS 1.0, UFS 2.0, UFS 3.0, and UFS 3.1 have been successively launched, and UFS-based storage devices have been widely used in a plurality of fields such as mobile phones, tablets, and surveillance. A huge market demand leads to rapid development of storage devices. People require more storage space and a higher storage speed, so that a UFS device can use a plurality of NAND channels to meet a bandwidth requirement of the UFS protocol.

The technical solutions of this application may be applied to a UFS-based electronic device. The electronic device may also be referred to as a UFS system, and may include a host (host) and a UFS device (UFS device) that are coupled to each other. The host may also be referred to as a UFS host (UFS host). Optionally, the electronic device may include but is not limited to a mobile phone, a tablet computer, a notebook computer, a computer, an ultra-mobile personal computer (ultra-mobile personal computer, UMPC), a netbook, a video camera, a camera, a vehicle-mounted device (for example, a car, a bicycle, an electric vehicle, an airplane, a ship, a train, or a high-speed railway), a virtual reality (virtual reality, VR) device, an augmented reality (augmented reality, AR) device, or the like.

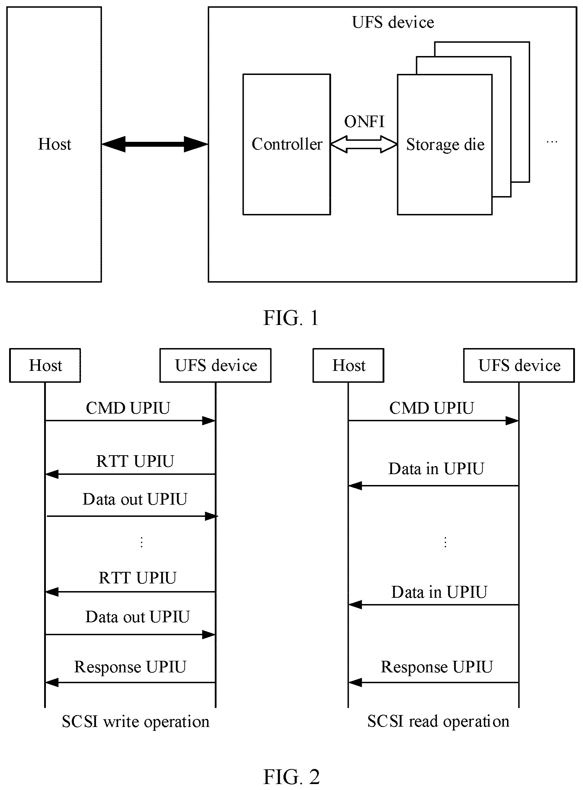

For example, as shown in FIG. 1, the UFS system may include a host and a UFS device that are coupled to each other. The UFS device includes a controller and a plurality of storage dies (die) coupled to the controller. The controller may be configured to control reading and writing of the plurality of storage dies. The controller may also be referred to as a UFS device controller (UFS device controller). The storage die may be a flash (nand flash) die, and the flash die may also be referred to as a flash chip or a flash memory chip. In a possible example, the controller may be coupled to the plurality of flash dies through parallel NAND (or nand) interfaces. Optionally, the NAND interface may be an open flash interface (open nand flash interface, ONFI), a toggle (or TOGGLE) interface, or the like. In FIG. 1, an example in which the NAND interface is ONFI is used for description.

In the UFS system, the host and the UFS device may communicate with each other through a UFS protocol information element (UFS protocol information unit, UPIU). The UPIU may include a command UPIU (command UPIU, CMD UPIU), a ready-to-transfer UPIU (ready-to-transfer UPIU, RTT UPIU), a data out UPIU (data out UPIU), a response UPIU (response UPIU), a data in UPIU (data in UPIU), and the like. In embodiments of this application, the UPIU may also be referred to as a frame. Therefore, the foregoing several types of UPIUs may also be respectively referred to as a command frame, a ready-to-transfer frame, a data frame, and a response frame.

The following uses a UFS SCSI system as an example. As shown in FIG. 2, when a SCSI write (write) operation is performed between the host and the UFS device, the SCSI write (write) operation is implemented through a CMD UPIU, an RTT UPIU, a data out UPIU, and a response UPIU. When a SCSI read (read) operation is performed, the SCSI read (read) operation is implemented through a CMD UPIU, a data in UPIU, and a response UPIU. In one SCSI write operation, a plurality of RTT UPIUs and a plurality of data out UPIUs may be included. In one SCSI read operation, a plurality of RTT UPIUs and a plurality of data in UPIUs may be included.

In an operation execution process, offsets (offset) of a plurality of RTT UPIUs or a plurality of data out UPIUs (or a plurality of data in UPIUs) corresponding to one CMD UPIU are in ascending order. For example, a CMD UPIU of the SCSI write operation is used as an example. If a total length required for transfer is 48 Kbytes (which may be represented as expected data length=48K), two data out UPIUs are obtained through division for transferring. According to the UFS protocol, a size of each data out UPIU needs to be an integer multiple of 4 Kbytes. For example, an offset of a first data out UPIU is 0 and a size of the first data out UPIU is 16 Kbytes (which may be represented as data buffer offset=0 and data transfer count=16K), and an offset of a second data out UPIU is 16K and a size of the second data out UPIU is 32 Kbytes (which may be represented as data buffer offset=16K and data transfer count=32K).

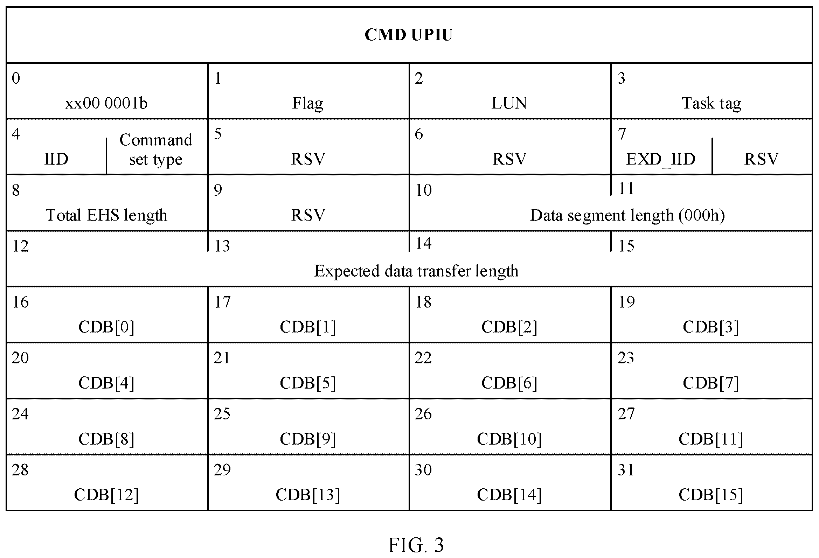

The following describes specific structures of the CMD UPIU, the RTT UPIU, and the data out UPIU by using FIG. 3 to FIG. 5.

As shown in FIG. 3, the CMD UPIU includes a frame header (header), and the frame header includes 0^{th} to 31^{st} bytes (byte). The 0^{th} byte is xx00 0001b, the 1^{st} byte is a flag (flags), the 2^{nd} byte is a logical unit number LUN, the 3^{rd} byte is a task tag (task tag), a most significant bit of the 4^{th} byte is an initiator identity (initiator identity, IID), a least significant bit of the 4^{th} byte is a command set type (command set type), the 5^{th} and 6^{th} bytes are reserved (reserved, RSV), a most significant bit of the 7^{th} byte is an extended (extended, EXD) initiator identity EXD_IID, a least significant bit of the 7^{th} byte is reserved RSV, the 8^{th} byte indicates a total extra header segment (extra header segment, EHS) length (total EHS length), the 9^{th} byte is reserved RSV, the 10^{th} and 11^{th} bytes indicate a data segment length (data segment length) (0000h), the 12^{th} to 15^{th} bytes indicate an expected data transfer length (expected data transfer length), and the 16^{th} to 31^{st} bytes are command descriptor blocks (command descriptor block, CDB) and are respectively represented as CDB[0] to CDB[15]. The expected data transfer length in the CMD UPIU indicates a total length of data expected to be transferred for a current input/output (input output, I/O) command. A CMD UPIU of the write operation is used as an example. The expected data transfer length indicates a total volume of data that needs to be written to a UFS device side this time.

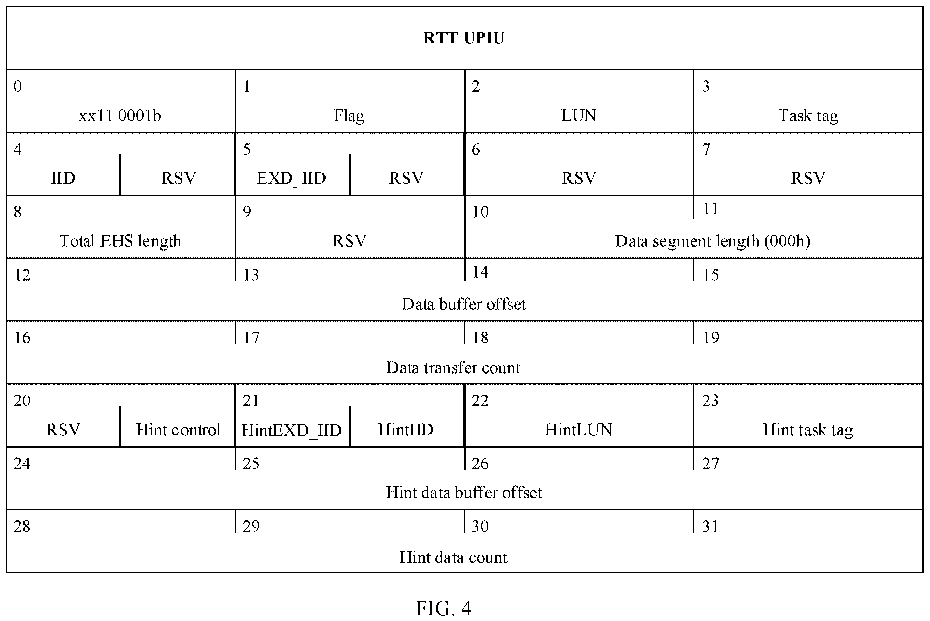

As shown in FIG. 4, the RTT UPIU includes a frame header, and the frame header includes 0^{th} to 31^{st} bytes. The 0^{th} byte is xx11 0001b, the 1^{st} byte is a flag (flag), the 2^{nd} byte is a LUN, the 3^{rd} byte is a task tag (task tag), a most significant bit of the 4^{th} byte is an IID, a least significant bit of the 4^{th} byte is reserved RSV, a most significant bit of the 5^{th} byte is an EXD_IID, a least significant bit of the 5^{th} byte is reserved RSV, the 6^{th} and 7^{th} bytes are reserved RSV, the 8^{th} byte indicates a total EHS length, the 9^{th} byte is reserved RSV, the 10^{th} and 11^{th} bytes indicate a data segment length (0000h), the 12^{th} to 15^{th} bytes indicate a data buffer offset (data buffer offset), the 16^{th} to 19^{th} bytes indicate a data transfer count (data transfer count), a least significant bit of the 20^{th} byte is reserved, a most significant bit of the 20^{th} byte is a hint control (hint control), a least significant bit of the 21^{st} byte is a hint expanded initiator identity (hintEXT_IID), a most significant bit of the 21^{st} byte is a hint initiator identity (hintIID), the 22^{nd} byte is a hint logical unit number (hintLUN), the 23^{rd} byte is a hint task tag (hint task tag), the 24^{th} to 27^{th} bytes indicate a hint data buffer offset (hint data buffer offset), and the 28^{th} to 31^{st} bytes indicate a hint data count (hint data count).

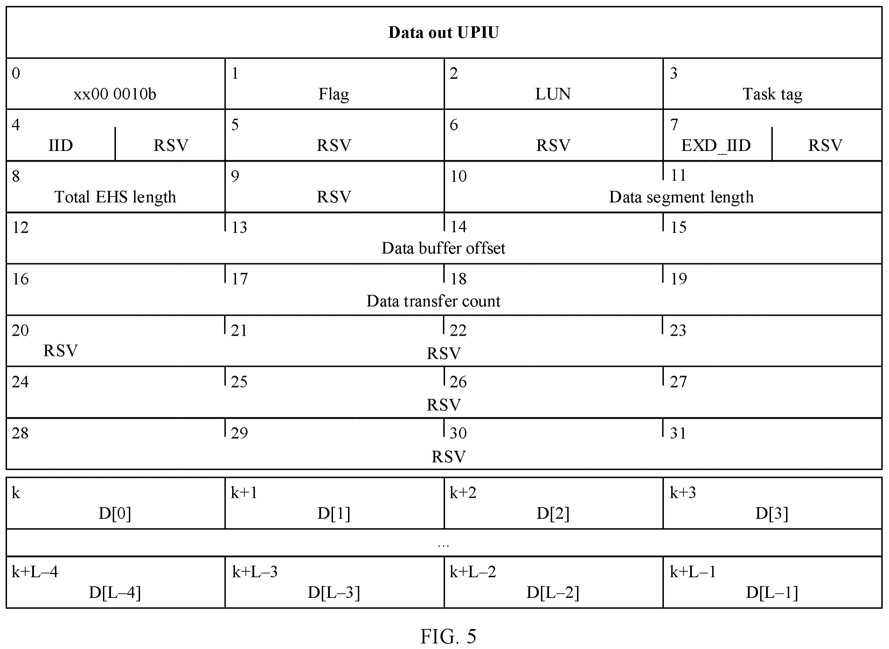

As shown in FIG. 5, the data out UPIU includes a frame header and a frame trailer. The frame header includes 0^{th} to 31^{st} bytes, and the frame trailer includes k^{th} to (k+L-1)^{th} bytes. L indicates a length of carried valid data. The 0^{th} byte is xx00 0010b, the 1^{st} byte is a flag (flags), the 2^{nd} byte is a LUN, the 3^{rd} byte is a task tag (task tag), a most significant bit of the 4^{th} byte is an IID, a least significant bit of the 4^{th} byte is reserved RSV, the 5^{th} and 6^{th} bytes are reserved RSV, a most significant bit of the 7^{th} byte is an EXD_IID, a least significant bit of the 7^{th} byte is reserved RSV, the 8^{th} byte indicates a total EHS length, the 9^{th} byte is reserved RSV, the 10^{th} and 11^{th} bytes indicate a data segment length, the 12^{th} to 15^{th} bytes indicate a data buffer offset (data buffer offset), the 16^{th} to 19^{th} bytes indicate a data transfer count (data transfer count), and the 20^{th} to 31^{st} bytes are reserved RSV. The k^{th} to (k+L-1)^{th} bytes are data D[0] to D[L-1].

The data out UPIU is a response of the host to the RTT UPIU of the UFS device during the current write I/O, and a volume of transferred data is the same as a data volume required by the RTT UPIU. The data buffer offset indicates a data offset of write data this time, the data transfer count indicates a size of the write data carried this time, and the data segment length indicates a length of actual valid data (excluding padding data (padding data)) carried this time. For a common write6/10/16 write I/O command, the data transfer count needs to be an integer multiple of a logical block size (4 Kbytes). Therefore, there is no padding data, and the data segment length is equal to the data transfer count.

With rapid development of a UFS technology, people impose higher requirements on data security. Especially in the in-vehicle field, end-to-end data security needs to be constructed by using channel-associated information, to implement end-to-end data protection. However, a current UFS protocol does not provide a mechanism for transferring channel-associated information of data, thereby limiting use and efficiency of the UFS.

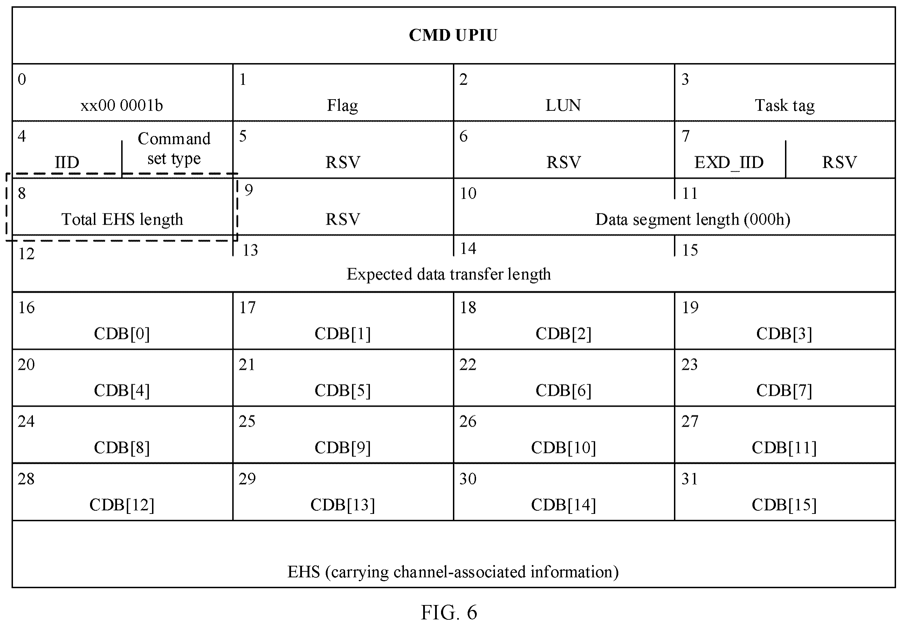

In a related technology, channel-associated information of data is usually transferred in the following two manners. In a first manner, for channel-associated information with a small volume of data, the host may implement transferring through a separate write operation (for example, similar to the foregoing SCSI write operation). However, this method causes a delay of the write operation to increase greatly, thereby reducing product competitiveness. In a second manner, an EHS defined in the UFS protocol is used for transferring. As shown in FIG. 6, in this solution, an EHS field of a specified length may be added after the CMD UPIU, and the channel-associated information may be carried in the EHS field. In this manner, use of a maximum I/O by the host is limited, and extra storage space needs to be added, resulting in high resource overheads.

In view of this, an embodiment of this application provides a UFS protocol-based transfer mechanism for channel-associated information, to complete transfer of data and the channel-associated information in a same write I/O, and a delay of a write operation is not increased, so that the foregoing problem of limited use and efficiency of the UFS is resolved. The following describes the solutions in embodiments of this application.

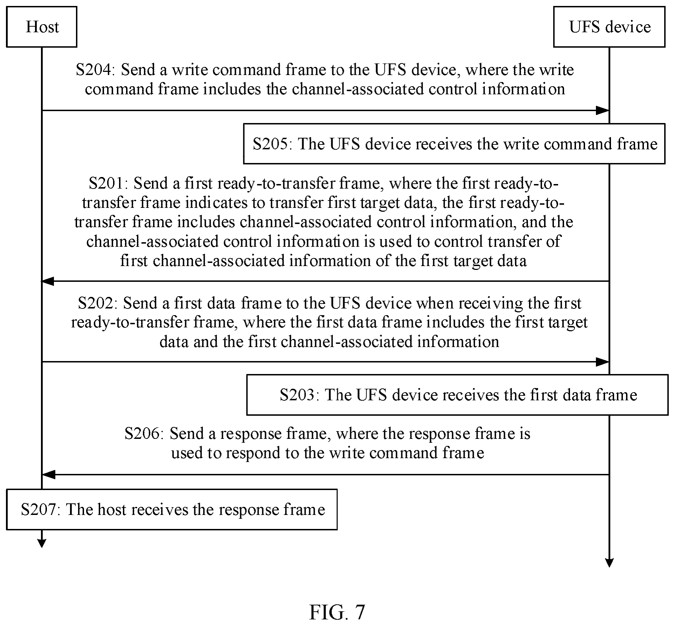

FIG. 7 is a schematic flowchart of a channel-associated information transfer method according to an embodiment of this application. The method may be applied to the UFS system provided above. The method includes the following several steps.

S201: A UFS device sends a first ready-to-transfer frame to a host, where the first ready-to-transfer frame indicates to transfer first target data, the first ready-to-transfer frame includes channel-associated control information, and the channel-associated control information is used to control transfer of first channel-associated information of the first target data.

The first channel-associated information may be channel-associated information (which may also be referred to as channel-associated data) of the first target data. The channel-associated information may be data that has a specific association relationship with the target data, and may be used to perform end-to-end protection on the first target data, to improve security of the first target data. Optionally, the first channel-associated information may include protection information, out-of-band information, and/or the like of the first target data. For example, the out-of-band information may include attribute information and the like of the first target data.

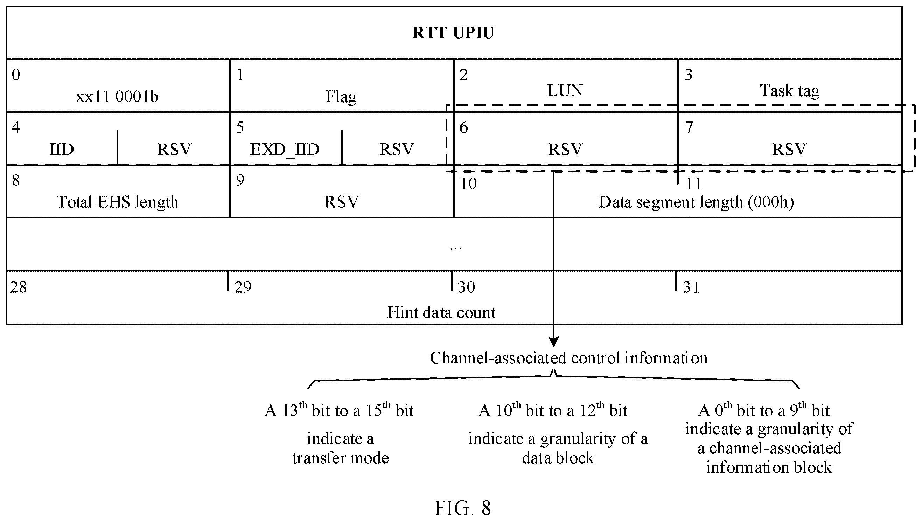

In addition, the first ready-to-transfer frame may include a frame header, and the channel-associated control information may be carried in the frame header. For example, the channel-associated control information may be carried in a reserved field in the frame header. In other words, the reserved field in the frame header is used to carry the channel-associated control information, and the reserved field may include one or more reserved bytes in the first ready-to-transfer frame, or a most significant bit or a least significant bit reserved in one or more bytes. In an example, a length of the reserved field is two bytes, and the two bytes may be two consecutive bytes. Optionally, as shown in FIG. 8, the first ready-to-transfer frame may be the foregoing RTT UPIU, and the reserved field may be 6^{th} and 7^{th} bytes in the RTT UPIU, in other words, the 6^{th} and 7^{th} bytes are used to carry the channel-associated control information.

In addition, that the channel-associated control information is used to control transfer of the first channel-associated information may include: The channel-associated control information is used to control whether to transfer the first channel-associated information. When the first channel-associated information is transferred, the channel-associated control information may be further used to control a transfer mode of the first channel-associated information. Optionally, the channel-associated control information may be further used to control transfer of the first target data. In other words, the channel-associated control information may be used to control transfer of the first channel-associated information, or may be used to control transfer of both the first target data and the first channel-associated information.

In a possible embodiment, the first target data may include at least one data block, the first channel-associated information may include at least one channel-associated information block, and the at least one data block one-to-one corresponds to the at least one channel-associated information block. The channel-associated control information may indicate at least one of the following information: a granularity of the data block, a granularity of the channel-associated information block, and an arrangement manner of the data block and the channel-associated information block. For example, the arrangement manner may include: a plurality of data blocks plus a plurality of channel-associated information blocks, a plurality of channel-associated information blocks plus a plurality of data blocks, a single data block plus a single channel-associated information block, and a single channel-associated information block plus a single data block.

It may be understood that, when the arrangement manner is a plurality of data blocks plus a plurality of channel-associated information blocks, or a plurality of channel-associated information blocks plus a plurality of data blocks, the granularity of the data block may alternatively be replaced with a data volume of the first target data (that is, the first target data is considered as one data block). The granularity of the channel-associated information block may alternatively be replaced with a data volume of the first channel-associated information (that is, the first channel-associated information is considered as one channel-associated information block).

Optionally, the channel-associated control information may include three fields. A first field may indicate a granularity ED_size of the channel-associated information block, a second field may indicate a granularity Data_size of the data block, and a third field may indicate a transfer mode ED_mode of the channel-associated control information. As shown in FIG. 8, for example, the channel-associated control information occupies the 6^{th} and 7^{th} bytes of the RTT UPIU. In this case, a 0^{th} bit to a 9^{th} bit (namely, a bit 0 to a bit 9) may indicate a granularity of the channel-associated information block, a 10^{th} bit to the 12^{th} bit (namely, a bit 10 to a bit 12) may indicate a granularity of the data block, and a 13^{th} bit to a 15^{th} bit (namely, a bit 13 to a bit 15) may indicate a transfer mode of the first channel-associated information. It may be understood that the foregoing positions and quantities of bits occupied by different fields are merely examples, and do not constitute a limitation on embodiments of this application.

In an example, the bit 0 to the bit 9 may indicate a size (in a unit of byte) of a corresponding channel-associated information block at a granularity of a corresponding data block. A specific size of the channel-associated information block may be set based on an actual requirement. This is not specifically limited in embodiments of this application. In addition, the bit 10 to the bit 12 may have a plurality of different values, and the different values may indicate data blocks of different granularities. For example, as shown in the following Table 1, if a value of the bit 0 to the bit 9 is 000, the granularity of the data block may be 32 bytes. If a value of the bit 0 to the bit 9 is 001, the granularity of the data block may be 64 bytes. If a value of the bit 0 to the bit 9 is 010, the granularity of the data block may be 128 bytes. If a value of the bit 0 to the bit 9 is 011, the granularity of the data block may be 256 bytes. If a value of the bit 0 to the bit 9 is 100, the granularity of the data block may be 512 bytes. If a value of the bit 0 to the bit 9 is 101, the granularity of the data block may be 1024 bytes. If a value of the bit 0 to the bit 9 is 110, the granularity of the data block may be 2048 bytes. If a value of the bit 0 to the bit 9 is 111, the granularity of the data block may be 4096 bytes.

**Table 1**

| Value of a bit 0 to a bit 9 | Granularity of a data block |
|---|---|
| 000 | 32 bytes |
| 001 | 64 bytes |
| 010 | 128 bytes |
| 011 | 256 bytes |
| 100 | 512 bytes |
| 101 | 1024 bytes |
| 110 | 2048 bytes |
| 111 | 4096 bytes |

It may be understood that correspondences between different values of the bit 0 to bit 9 and different granularities of the data block shown in Table 1 are merely examples. During actual application, there may be other correspondences between the different values of the bit 0 to bit 9 and the different granularities of the data block, or there is another granularity of the data block. Table 1 does not constitute a limitation on embodiments of this application.

In another example, as shown in the following Table 2, if a value of the bit 13 to the bit 15 is 000, the transfer mode may be a normal (normal) mode, in other words, the first channel-associated information is not transferred in this mode. If a value of the bit 13 to the bit 15 is 001, the transfer mode may be a first mode mode1, and the first mode mode1 may be a single channel-associated information block plus a single data block. If a value of the bit 13 to the bit 15 is 010, the transfer mode may be a second mode mode2, and the second mode mode2 may be a single data block plus a single channel-associated information block. If a value of the bit 13 to the bit 15 is 011, the transfer mode may be a third mode mode3, and the third mode mode3 may be a plurality of channel-associated information blocks plus a plurality of data blocks. If a value of the bit 13 to the bit 15 is 100, the transfer mode may be a fourth mode mode4, and the fourth mode mode4 may be a plurality of data blocks plus a plurality of channel-associated information blocks. If a value of the bit 13 to the bit 15 is 101, 110, or 111, the transfer mode may be reserved.

**Table 2**

| Bit 13 to bit 15 | Transfer mode |
|---|---|
| 000 | Normal: The first channel-associated information is not transferred. |
| 001 | mode1: a single channel-associated information block plus a single data block |
| 010 | mode2: a single data block plus a single channel-associated information block |
| 011 | mode3: a plurality of channel-associated information blocks plus a plurality of data blocks |
| 100 | mode4: a plurality of data blocks plus a plurality of channel-associated information blocks |
| 101, 110, or 111 | Reserved |

It may be understood that correspondences between different values of the bit 13 to the bit 15 and different transfer modes shown in Table 2 are merely examples. During actual application, there may be other correspondences between the different values of the bit 13 to the bit 15 and the different transfer modes. Table 2 does not constitute a limitation on embodiments of this application.

In a possible example, the channel-associated control information may indicate that the transfer mode of the first channel-associated information is a first mode mode1, the granularity of the channel-associated information block is 16 bytes, and the granularity of the data block is 4 Kbytes. In this case, values of three fields corresponding to the channel-associated control information may be represented as ED_mode=1, data_size=7, and ED_size=16. Alternatively, the channel-associated control information may indicate that the transfer mode of the first channel-associated information is a second mode mode2, the granularity of the channel-associated information block is 8 bytes, and the granularity of the data block is 2 Kbytes. In this case, values of three fields corresponding to the channel-associated control information may be represented as ED_mode=2, data_size=6, and ED_size=8. Alternatively, the channel-associated control information may indicate that the transfer mode of the first channel-associated information is a third mode mode3, the granularity of the channel-associated information block is 64 bytes, and the granularity of the data block is 16 Kbytes. In this case, values of the three fields corresponding to the channel-associated control information may be represented as ED_mode=3, data_size reserved (which may be ignored in this mode), and ED_size=64. Alternatively, the channel-associated control information may indicate that the transfer mode of the first channel-associated information is a fourth mode mode4, the granularity of the channel-associated information block is 256 bytes, and the granularity of the data block is 32 Kbytes. In this case, values of three fields corresponding to the channel-associated control information may be represented as ED_mode=4, data_size reserved (which may be ignored in this mode), and ED_size=256.

S202: When the host receives the first ready-to-transfer frame, the host sends a first data frame to the UFS device, where the first data frame includes the first target data and the first channel-associated information.

The first data frame may include a frame header and a frame trailer, and the first target data and the first channel-associated information may be located at the frame trailer of the first data frame. Optionally, the first data frame may further include the foregoing channel-associated control information. For example, the channel-associated control information may be carried in the frame header of the first data frame. For example, the channel-associated control information may be carried in a reserved field in the frame header. In other words, the reserved field in the frame header is used to carry the channel-associated control information, and the reserved field may include one or more reserved bytes in the frame header of the first data frame, or a most significant bit or a least significant bit reserved in one or more bytes. In an example, a length of the reserved field is two bytes, and the two bytes may be two consecutive bytes. Optionally, the first data frame may be the foregoing data out UPIU, and the reserved field may be the 5^{th} and 6^{th} bytes in the data out UPIU.

In addition, when the first data frame is a data out UPIU, and the data out UPIU further carries the channel-associated control information, for specific descriptions of carrying the channel-associated control information in the data out UPIU, correspondingly refer to related descriptions of carrying the channel-associated control information in the RTT UPIU in step S201. Details are not described herein again in embodiments of this application.

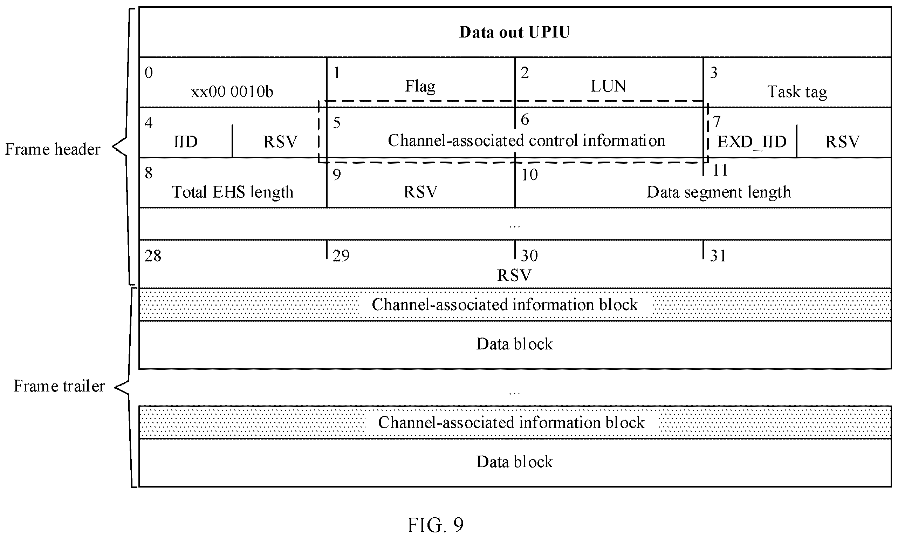

In a possible example, if the first data frame is a data out UPIU, the data out UPIU carries the channel-associated control information, and the channel-associated control information corresponds to ED_mode=1. As shown in FIG. 9, the data out UPIU may include a frame header and a frame trailer, and 5^{th} and 6^{th} bytes in the frame header may carry the channel-associated control information. The frame trailer includes the first target data and the first channel-associated information, and the first target data and the first channel-associated information are arranged in a manner of a single channel-associated information block plus a single data block.

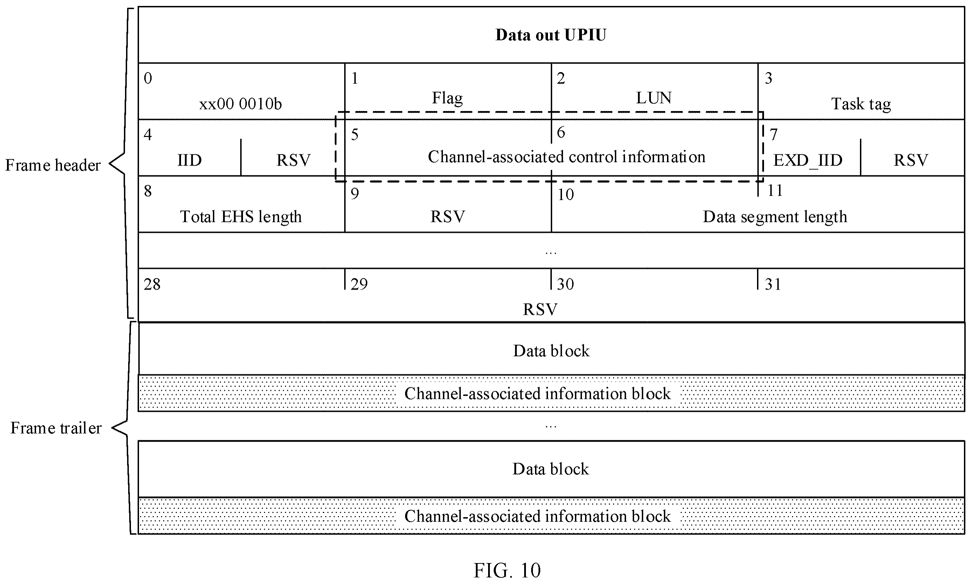

In another possible example, if the first data frame is a data out UPIU, the data out UPIU carries the channel-associated control information, and the channel-associated control information corresponds to ED_mode=2. As shown in FIG. 10, the data out UPIU may include a frame header and a frame trailer, and 5^{th} and 6^{th} bytes in the frame header may carry the channel-associated control information. The frame trailer includes the first target data and the first channel-associated information, and the first target data and the first channel-associated information are arranged in a manner of a single data block plus a single channel-associated information block.

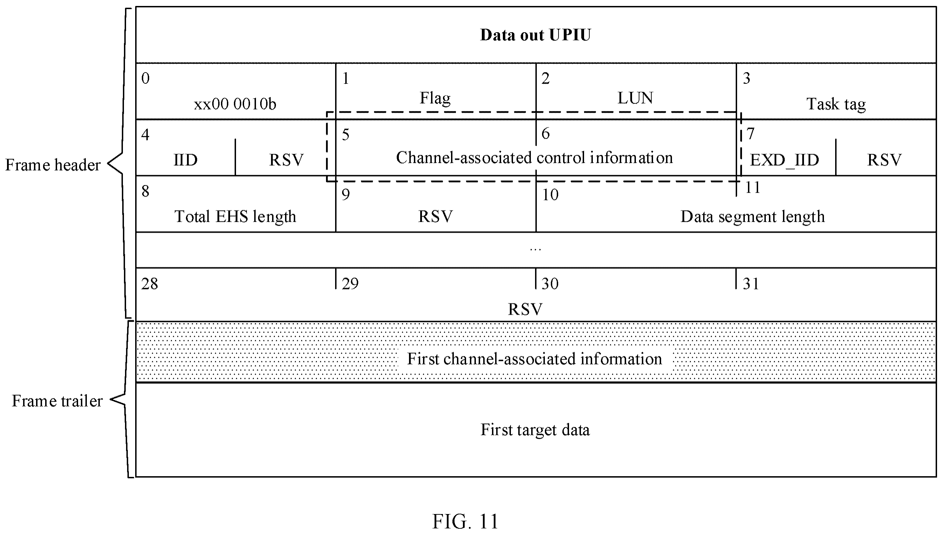

In still another possible example, if the first data frame is a data out UPIU, the data out UPIU carries the channel-associated control information, and the channel-associated control information corresponds to ED_mode=3. As shown in FIG. 11, the data out UPIU may include a frame header and a frame trailer, and 5^{th} and 6^{th} bytes in the frame header may carry the channel-associated control information. The frame trailer includes the first target data and the first channel-associated information, and the first target data and the first channel-associated information are arranged in a manner of a plurality of channel-associated information blocks (namely, the first channel-associated information) plus a plurality of data blocks (namely, the first target data). In this case, the granularity of the channel-associated information block may be equal to a size of the first channel-associated information.

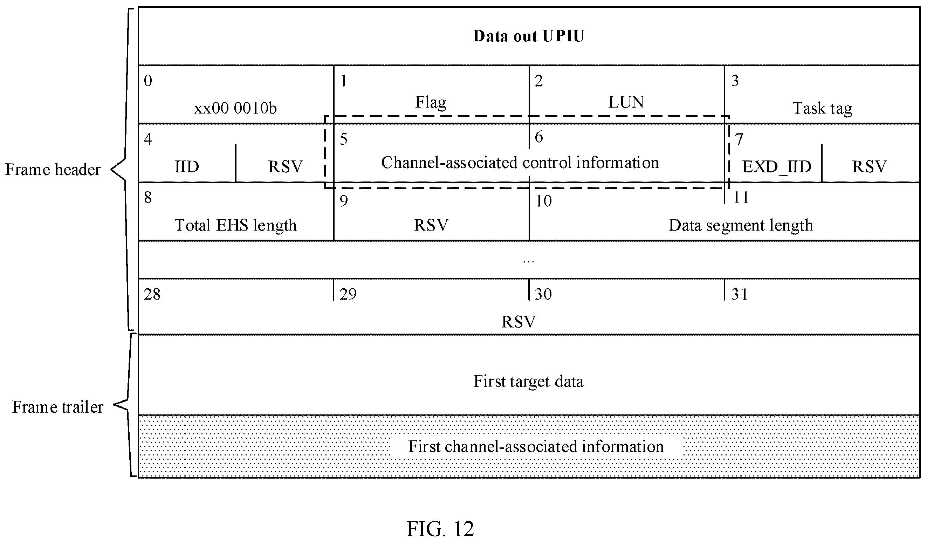

In another possible example, if the channel-associated control information corresponds to ED_mode=4, as shown in FIG. 12, the data out UPIU may include a frame header and a frame trailer, and 5^{th} and 6^{th} bytes in the frame header may carry the channel-associated control information, the frame trailer includes the first target data and the first channel-associated information, and the first target data and the first channel-associated information are arranged in a manner of a plurality of data blocks (namely, the first target data) plus a plurality of channel-associated information blocks (namely, the first channel-associated information). In this case, the granularity of the channel-associated information block may be equal to a size of the first channel-associated information.

S203: The UFS device receives the first data frame.

When the host sends the first data frame to the UFS device, the UFS device may receive the first data frame, so that the UFS device may store the first target data and the first channel-associated information in the first data frame. For example, the UFS device may store the first target data and the first channel-associated information in a storage die of the UFS device.

It may be understood that specific descriptions of the first data frame in S203 are consistent with the descriptions of the first data frame in S202. For details, refer to related descriptions in S202. Details are not described herein again in embodiments of this application.

In the channel-associated information transfer method provided in this embodiment of this application, when receiving the first ready-to-transfer frame from the UFS device, the host may send, to the UFS device based on the channel-associated control information carried in the first ready-to-transfer frame, the first data frame that carries the first target data and the first channel-associated information, so that the UFS device may receive the first data frame. In this way, the host and the UFS device may complete transfer of data and channel-associated information in a same write I/O, a delay of a write operation is not increased, and no additional signaling is required, so that a problem of limited use and efficiency of the UFS in the conventional technology is resolved, and efficient transfer of channel-associated information of data is implemented.

Further, as shown in FIG. 7, the method further includes S204 to S207. S204 and S205 may be performed before S201, and S206 and S207 may be performed after S203.

S204: The host sends a write command frame to the UFS device, where the write command frame is used to request to write the first target data, and the write command frame includes the channel-associated control information.

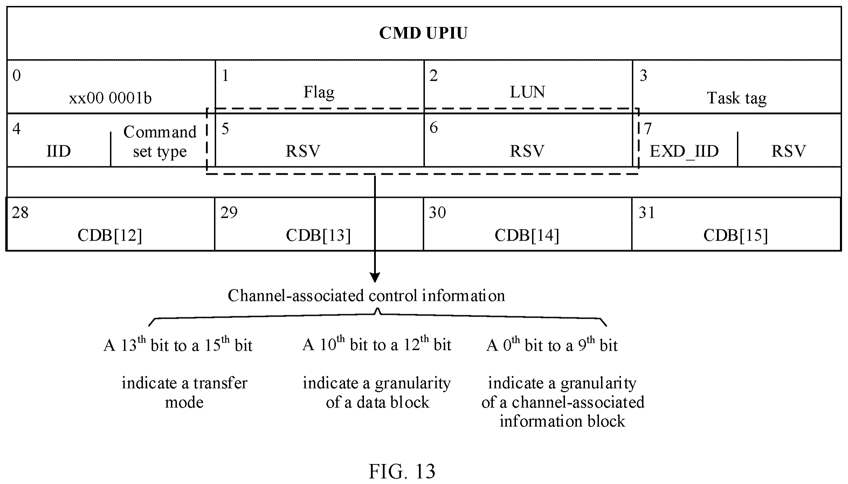

The write command frame may include a frame header, and the channel-associated control information may be carried in the frame header. For example, the channel-associated control information may be carried in a reserved field in the frame header. In other words, the reserved field in the frame header is used to carry the channel-associated control information, and the reserved field may include one or more reserved bytes in the write command frame, or a most significant bit or a least significant bit reserved in one or more bytes. In an example, a length of the reserved field is two bytes, and the two bytes may be two consecutive bytes. Optionally, as shown in FIG. 13, the write command frame may be the foregoing CMD UPIU, and the reserved field may be the 5^{th} and 6^{th} bytes in the CMD UPIU, in other words, the 5^{th} and 6^{th} bytes are used to carry the channel-associated control information.

In addition, when the write command frame is a CMD UPIU, and the CMD UPIU carries the channel-associated control information, a specific description of carrying the channel-associated control information in the CMD UPIU is similar to the description of carrying the channel-associated control information in the RTT UPIU in S201. For details, refer to related descriptions in S201. Details are not described herein again in embodiments of this application.

In a possible embodiment, when the host needs to write data into the UFS device, the host may send, to the UFS device, a write command frame carrying the channel-associated control information. The write command frame may be used to request to write the first target data. For example, the write command frame is the foregoing CMD UPIU, and 5^{th} and 6^{th} bytes in the CMD UPIU may be used to carry the channel-associated control information.

S205: The UFS device receives the write command frame.

When the host sends the write command frame to the UFS device, the UFS device may receive the write command frame, so that the UFS device may determine the channel-associated control information based on the write command frame. When the first ready-to-transfer frame is sent to the host in S201, the channel-associated control information is carried in the first ready-to-transfer frame.

It may be understood that detailed descriptions of the write command frame in S205 are consistent with detailed descriptions of the write command frame in S204. For details, refer to related descriptions in S204. Details are not described herein again in embodiments of this application.

S206: The UFS device sends a response frame to the host, where the response frame is used to respond to the write command frame.

S207: The host receives the response frame.

The response frame in the foregoing two steps may be the foregoing response UPIU. For specific descriptions of the response UPIU, refer to related descriptions in the UFS protocol. Details are not described herein again in embodiments of this application.

In a possible embodiment, when the write command frame is used to request to write the first target data, and the UFS device receives the first data frame sent by the host, the UFS device may send a response frame to the host. The response frame may be used to respond to the write command frame. In this way, when receiving the response frame sent by the UFS device, the host may determine, based on the response frame, that a write operation corresponding to the write command frame is completed, or that one write I/O is completed.

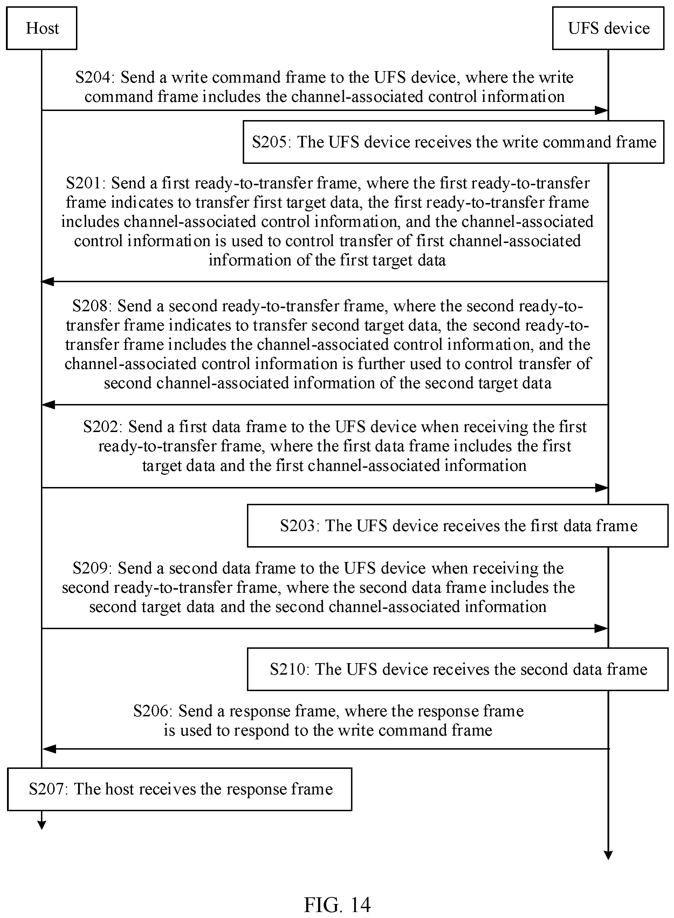

Further, with reference to FIG. 7, as shown in FIG. 14, if the write command frame is further used to request to write second target data, the method further includes S208 to S210. S208 may be performed after S201, S209 and S210 are performed after S203, and S208 to S210 are all performed before S206 and S207. In addition, S202 and S203, and S208 are not subject to a specific sequence. In FIG. 14, an example in which S208 is performed before S202 is used for description.

S208: The UFS device sends a second ready-to-transfer frame to the host, where the second ready-to-transfer frame indicates to transfer the second target data, the second ready-to-transfer frame includes the channel-associated control information, and the channel-associated control information is further used to control transfer of second channel-associated information of the second target data.

The second channel-associated information may be channel-associated information of the second target data, and the channel-associated information may be used to perform end-to-end protection on the second target data, to improve security of the second target data. Optionally, the second channel-associated information may include protection information, out-of-band information, and/or the like of the second target data. For example, the out-of-band information may include attribute information and the like of the second target data.

In addition, the second ready-to-transfer frame may include a frame header, and the channel-associated control information may be carried in the frame header. For example, the channel-associated control information may be carried in a reserved field in the frame header. In other words, the reserved field in the frame header is used to carry the channel-associated control information. In an example, a length of the reserved field is two bytes, and the two bytes may be two consecutive bytes. Optionally, as shown in FIG. 8, the second ready-to-transfer frame may be the foregoing RTT UPIU, and the reserved field may be the 6^{th} and 7^{th} bytes in the RTT UPIU.

In addition, when the second ready-to-transfer frame is an RTT UPIU, and the RTT UPIU carries the channel-associated control information, specific descriptions of carrying the channel-associated control information in the RTT UPIU are similar to the descriptions of carrying the channel-associated control information in the RTT UPIU in S201. For details, refer to related descriptions in S201. Details are not described herein again in embodiments of this application.

Optionally, when the write command frame is used to request to write the first target data and the second target data, the write command frame may indicate a total volume of data expected to be transferred, and the total volume of data may be equal to a sum of a data volume of the first target data and a data volume of the second target data.

S209: When the host receives the second ready-to-transfer frame, the host sends a second data frame to the UFS device, where the second data frame includes the second target data and the second channel-associated information.

The second data frame may include a frame header and a frame trailer, and the second target data and the second channel-associated information may be located at the frame trailer of the second data frame. Optionally, the second data frame may further include the foregoing channel-associated control information. For example, the channel-associated control information may be carried in the frame header of the second data frame. For example, the channel-associated control information may be carried in a reserved field in the frame header. In other words, the reserved field in the frame header is used to carry the channel-associated control information. In an example, a length of the reserved field is two bytes, and the two bytes may be two consecutive bytes. Optionally, the second data frame may be the foregoing data out UPIU, and the reserved field may be the 5^{th} and 6^{th} byte in the data out UPIU.

In addition, when the second data frame is a data out UPIU, and the data out UPIU further carries the channel-associated control information, for specific descriptions of carrying the channel-associated control information in the data out UPIU, correspondingly refer to related descriptions of carrying the channel-associated control information in the RTT UPIU in S201. Details are not described herein again in embodiments of this application.

It may be understood that, when the second data frame is a data out UPIU, the data out UPIU carries the channel-associated control information, and the channel-associated control information corresponds to ED_mode=1, ED_mode=2, ED_mode=3 or ED_mode=4, specific descriptions of carrying the channel-associated control information, the second target data, and the second channel-associated information in the second data frame are similar to the descriptions of carrying the channel-associated control information, the first target data, and the first channel-associated information in the first data frame in S202. For details, refer to related descriptions in S202. Details are not described herein again in embodiments of this application.

S210: The UFS device receives the second data frame.

When the host sends the second data frame to the UFS device, the UFS device may receive the second data frame, so that the UFS device may store the second target data and the second channel-associated information in the second data frame. For example, the UFS device may store the second target data and the second channel-associated information in a storage die of the UFS device.

It may be understood that specific descriptions of the second data frame in S210 are consistent with the descriptions of the second data frame in S209. For details, refer to related descriptions in S209. Details are not described herein again in embodiments of this application.

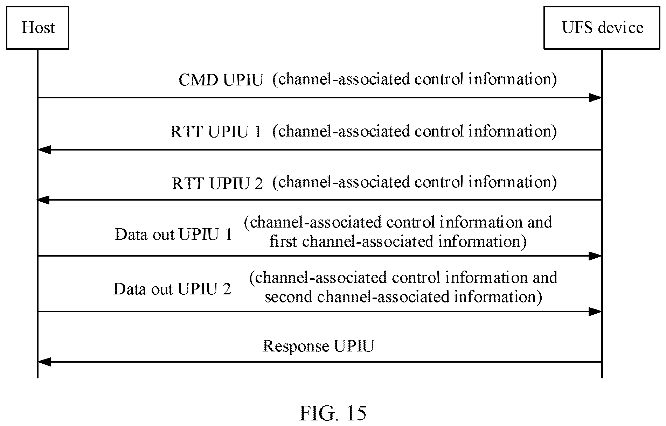

For example, the write command frame is a CMD UPIU, the first ready-to-transfer frame is an RTT UPIU 1, the second ready-to-transfer frame is an RTT UPIU 2, the first data frame is a data out UPIU 1, and the second data frame is a data out UPIU 2. In addition, the different frames all carry channel-associated control information. Therefore, the method procedure provided in FIG. 14 may be simplified as that shown in FIG. 15.

Further, when a total data volume of target data expected to be transferred in the write command frame sent by the host is large, the UFS device may send a larger quantity of ready-to-transfer frames to the host, and each ready-to-transfer frame may indicate to transfer a part of the target data, so that the host separately sends the target data to the UFS device by using the corresponding larger quantity of data frames, to transfer, to the UFS device, all the target data expected to be transferred. In the foregoing write operation, only an example in which the first ready-to-transfer frame, the second ready-to-transfer frame, the first data frame, and the second data frame are transferred is used for description, and does not constitute a limitation on embodiments of this application.

In other words, when the total data volume of the target data that is expected to be transferred and that is indicated in the write command frame sent by the host to the UFS device is large, the UFS device may send a plurality of ready-to-transfer frames to the host after receiving the write command frame, where each ready-to-transfer frame may indicate to transfer a part of the target data. The host may alternatively send the target data to the UFS device by using a corresponding quantity of data frames, to transfer, to the UFS device, all the target data that is expected to be transferred. In the foregoing write operation process, the host and the UFS device can complete transfer of channel-associated information of all data in a same write I/O, and a delay of the write operation is not increased, so that a problem of limited use and efficiency of the UFS in the conventional technology is resolved, and efficient transfer of channel-associated information of data is implemented.

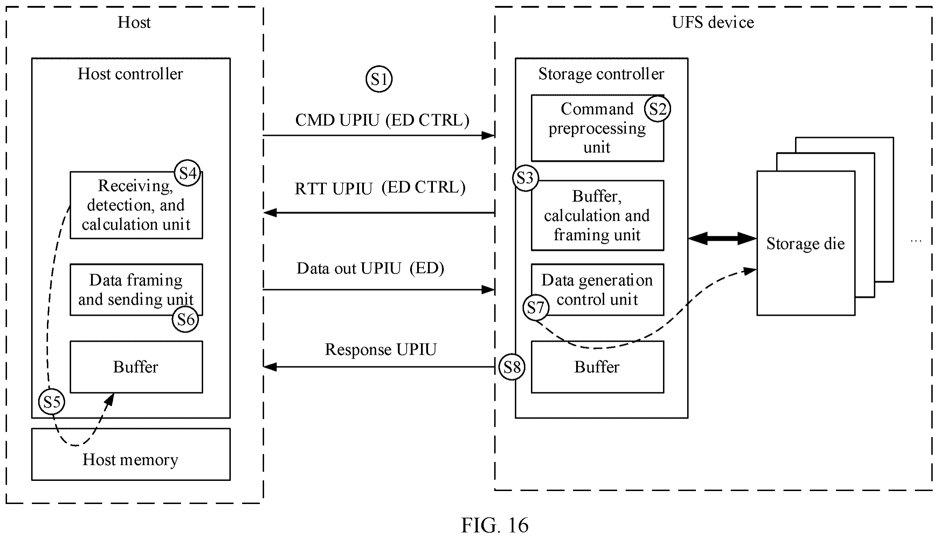

For ease of understanding, the following uses structures of the host and the UFS device shown in FIG. 16 as an example to describe the solutions provided in embodiments of this application.

As shown in FIG. 16, the host may include a host controller and a host memory. The host controller may include a receiving, detection, and calculation unit, a data framing and sending unit, and a buffer. The receiving, detection, and calculation unit may be used to parse channel-associated control information (for example, an arrangement manner of data and channel-associated information, and a granularity of a channel-associated information block) carried in a received ready-to-transfer frame, perform validity check on information obtained through parsing, and store the information after the check is passed, to facilitate use when a data frame is subsequently sent. The data framing and sending unit may be used to: after receiving a correct RTT UPIU, read data and channel-associated information from a host memory to the buffer in a required arrangement manner based on the channel-associated control information in the RTT UPIU, perform framing to generate a data out UPIU, and send the data out UPIU to the UFS device. The buffer may be used to temporarily store the data and the channel-associated information that are read from the host memory, and release space after the data out UPIU is sent.

As shown in FIG. 16, the UFS device may include a storage controller and a storage die. The storage controller may include a command preprocessing unit, a buffer calculation and framing unit, a data generation control unit, and a buffer. The command preprocessing unit may be used to: after the UFS device receives a CMD UPIU, determine whether the current CMD UPIU carries channel-associated control information, perform parsing based on a field used to carry the channel-associated control information, and record an arrangement manner, a size, a granularity, and the like of the channel-associated information in the current I/O. The buffer, calculation and framing unit may be used to: after the UFS device receives the CMD UPIU, calculate buffer space and a data arrangement manner based on a size of data, a size of the channel-associated information, and the arrangement manner, and send an RTT UPIU based on buffer space obtained through application. The data generation control unit may be used to: when the data out UPIU is received, identify whether the current data out UPIU carries the channel-associated information, and if the current data out UPIU carries the channel-associated information, write the data and the channel-associated information into a specified buffer based on the channel-associated control information. The buffer may be used to temporarily buffer the data and the channel-associated information, and exchange data with the storage die.

In a possible embodiment, the channel-associated information transfer method may include the following steps. S1: The host may send, to the UFS device, a CMD UPIU carrying channel-associated control information. S2: When the UFS device receives the CMD UPIU, the command preprocessing unit in the UFS device may parse the CMD UPIU, and when identifying that the CMD UPIU is a write I/O carrying the channel-associated control information, execute a command and prepare data space. S3: The buffer, calculation and framing unit in the UFS device determines a length of target data that is expected to be transferred in the CMD UPIU and a space status of a local buffer, generates an RTT UPIU based on the channel-associated control information, and sends the RTT UPIU to the host, where the RTT UPIU carries the channel-associated control information. S4: When the host receives the RTT UPIU, the receiving, detection and calculation unit in the host parses the RTT UPIU and the carried channel-associated control information, and performs validity check. S5: After the check is passed, the receiving, detection and calculation unit reads the data from the host memory to an internal buffer based on the RTT UPIU, and arranges the data and the channel-associated information in an arrangement manner indicated by the channel-associated control information. S6: The data framing and sending unit in the host performs framing on the data out UPIU, to pack a frame header, data, and channel-associated information of the data out UPIU and send a packed frame header, packed data, and packed channel-associated information to the UFS device. S7: After the UFS device receives the data out UPIU, the data generation control unit in the UFS device writes the data and the channel-associated information into the internal buffer, and subsequently writes the data and the channel-associated information into the storage die. S8: The UFS device sends a response UPIU to the host after the command is completed. In FIG. 16, the channel-associated control information is represented as ED CTRL, and the channel-associated information is represented as ED.

In the technical solution provided in embodiments of this application, the host and the UFS device can complete transfer of channel-associated information of all data in a same write I/O, and a delay of a write operation is not increased, so that a problem of limited use and efficiency of the UFS in the conventional technology is resolved, and efficient transfer of channel-associated information of data is implemented.

The foregoing mainly describes the solutions provided in embodiments of this application from perspectives of the host and the UFS device. It may be understood that, to implement the foregoing functions, the host and the UFS device include a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the host and the UFS device may be divided into functional modules based on the foregoing method examples. For example, each functional module may be obtained through division based on a corresponding function, or two or more functions may be integrated into one processing module. The functional module may be implemented in a form of hardware, or may be implemented in a form of a software functional module. It should be noted that, in embodiments of this application, module division is an example, and is merely a logical function division. During actual implementation, another division manner may be used. The following uses division of each functional module based on a corresponding function as an example for description.

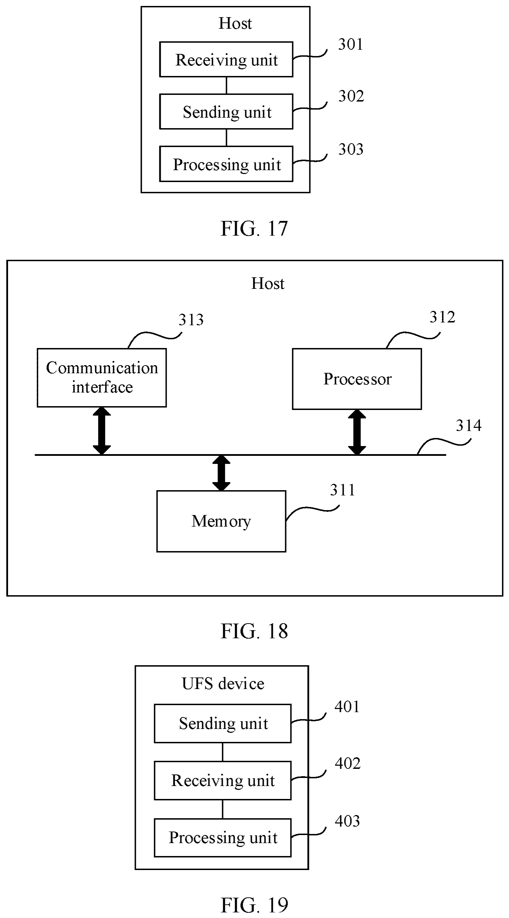

When an integrated unit is used, FIG. 17 is a diagram of a possible structure of a channel-associated information transfer apparatus in the foregoing embodiments. The apparatus may be a host or a chip built in a host. The apparatus includes a receiving unit 301, a sending unit 302, and a processing unit 303. In a possible embodiment, the receiving unit 301 may be configured to support the apparatus in performing the step of receiving the first ready-to-transfer frame in S202 in the foregoing method embodiment. The sending unit 302 may be configured to support the apparatus in performing the step of sending the first data frame in S202 in the foregoing method embodiment. The processing unit 303 may be configured to support the apparatus in performing the steps of parsing the first ready-to-transfer frame and generating the first data frame in the foregoing method embodiments. Further, the sending unit 302 may be further configured to support the apparatus in performing S204 in the foregoing method embodiment. The receiving unit 301 may be further configured to support the apparatus in performing S207 in the foregoing method embodiment. In another possible embodiment, the receiving unit 301 may be further configured to support the apparatus in performing the step of receiving the second ready-to-transfer frame in S209 in the foregoing method embodiment. The sending unit 302 may be configured to support the apparatus in performing the step of sending the second data frame in S209 in the foregoing method embodiment. The processing unit 303 may be configured to support the apparatus in performing the steps of parsing the second ready-to-transfer frame and generating the second data frame in the foregoing method embodiments.

All related content of each step involved in the foregoing method embodiment may be referenced to a function description of a corresponding functional module, and details are not described herein again.

Based on hardware implementation, the processing unit 303 may be a processor, the receiving unit 301 may be a receiver, and the sending unit 302 may be a sender. The receiver and the transmitter may be integrated into a transceiver, and the transceiver may also be referred to as a communication interface.

FIG. 18 is a diagram of a possible structure of a channel-associated information transfer apparatus according to an embodiment of this application. The channel-associated information transfer apparatus may be a host or a chip built in a host. The apparatus includes a memory 311 and a processor 312. The memory 311 is configured to store program code and data of the apparatus, and the processor 312 is configured to control an action of the host in the foregoing method embodiments. For example, the processor 312 is configured to perform the steps of parsing the first ready-to-transfer frame and generating the first data frame, the steps of parsing the second ready-to-transfer frame and generating the second data frame in the foregoing method embodiments, and/or another process of the technology described in this specification. Optionally, the apparatus may further include a communication interface 313, and the communication interface 313 is configured to support the apparatus in performing the step of communicating with the UFS device in the foregoing method embodiments.

The processor 312 may be a central processing unit, a general-purpose processor, a digital signal processor, an application-specific integrated circuit, a processing chip, a field programmable gate array or another programmable logic device, a transistor logic device, a hardware component, or any combination thereof. The processor 312 may implement or execute, for example, various logical blocks, modules, and circuits described with reference to content disclosed in embodiments of this application. Alternatively, the processor 312 may be a combination of processors implementing a computing function, for example, a combination of one or more microprocessors, or a combination of the digital signal processor and a microprocessor. The communication interface 313 may be a transceiver, a transceiver circuit, a transceiver interface, or the like. The memory 311 may be a volatile memory, a non-volatile memory, or the like.

For example, the communication interface 313, the processor 312, and the memory 311 are connected to each other through a bus 314. The bus 314 may be a peripheral component interconnect (peripheral component interconnect, PCI) bus, an extended industry standard architecture (extended industry standard architecture, EISA) bus, or the like. Buses 314 may be classified into an address bus, a data bus, a control bus, and the like. For ease of representation, only one thick line is used to represent the bus in the figure, but this does not mean that there is only one bus or only one type of bus.

Optionally, the memory 311 may be included in the processor 312.

When an integrated unit is used, FIG. 19 is a diagram of a possible structure of a channel-associated information transfer apparatus in the foregoing embodiments. The apparatus may be a UFS device, and the apparatus includes a sending unit 401, a receiving unit 402, and a processing unit 403. In a possible embodiment, the sending unit 401 may be configured to support the apparatus in performing S201 in the foregoing method embodiment. The receiving unit 402 may be configured to support the apparatus in performing S203 in the foregoing method embodiment. The processing unit 403 may be configured to support the apparatus in performing the steps of generating a first ready-to-transfer frame and parsing a first data frame in the foregoing method embodiments. Further, the receiving unit 402 may be further configured to support the apparatus in performing S205 in the foregoing method embodiment. The sending unit 401 may be further configured to support the apparatus in performing S206 in the foregoing method embodiment. In another possible embodiment, the sending unit 401 may be further configured to support the apparatus in performing S208 in the foregoing method embodiment. The receiving unit 402 may be further configured to support the apparatus in performing S210 in the foregoing method embodiment. The processing unit 403 may be configured to support the apparatus in performing the steps of generating a second ready-to-transfer frame and parsing a second data frame in the foregoing method embodiments.

All related content of each step involved in the foregoing method embodiment may be referenced to a function description of a corresponding functional module, and details are not described herein again.

Based on hardware implementation, the processing unit 403 may be a processor, the receiving unit 402 may be a receiver, and the sending unit 401 may be a sender. The receiver and the sender may be integrated into a transceiver, and the transceiver may also be referred to as a communication interface.

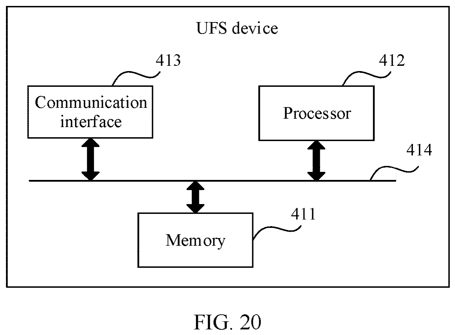

FIG. 20 is a diagram of a possible structure of a channel-associated information transfer apparatus according to an embodiment of this application. The apparatus may be a UFS device. The apparatus includes a memory 411 and a processor 412. The memory 411 is configured to store program code and data of the apparatus, and the processor 412 is configured to control an action of the host in the foregoing method embodiments. For example, the processor 412 is configured to perform the steps of generating a first ready-to-transfer frame and parsing a first data frame, the steps of generating a second ready-to-transfer frame and parsing a second data frame in the foregoing method embodiments, and/or another process of the technology described in this specification. Optionally, the apparatus may further include a communication interface 413. The communication interface 413 is configured to support the apparatus in performing the step of communicating with the host in the foregoing method embodiments.

The processor 412 may be a central processing unit, a general-purpose processor, a digital signal processor, an application-specific integrated circuit, a processing chip, a field programmable gate array or another programmable logic device, a transistor logic device, a hardware component, or any combination thereof. The processor 412 may implement or execute, for example, various logical blocks, modules, and circuits described with reference to content disclosed in embodiments of this application. Alternatively, the processor 412 may be a combination of processors implementing a computing function, for example, a combination of one or more microprocessors, or a combination of the digital signal processor and a microprocessor. The communication interface 413 may be a transceiver, a transceiver circuit, a transceiver interface, or the like. The memory 411 may be a volatile memory, a nonvolatile memory, or the like.

For example, the communication interface 413, the processor 412, and the memory 411 are connected to each other through a bus 414. The bus 414 may be a PCI bus, an EISA bus, or the like. Buses 414 may be classified into an address bus, a data bus, a control bus, and the like. For ease of representation, only one thick line is used to represent the bus in the figure, but this does not mean that there is only one bus or only one type of bus.

Optionally, the memory 411 may be included in the processor 412.

According to another aspect of this application, an electronic device is further provided. The electronic device includes any host provided above and any UFS device provided above. The host is configured to perform the steps of the host in the channel-associated information transfer method provided in the foregoing method embodiments. The UFS device is configured to perform the steps of the UFS device in the channel-associated information transfer method provided in the foregoing method embodiments.

All or some of the methods provided in embodiments of this application may be implemented by using software, hardware, or a combination thereof. When software is used to implement the embodiments, all or a part of the embodiments may be implemented in a form of computer program product. The computer program product includes one or more computer instructions. When the computer program instructions are loaded and executed on a computer, all or some of the procedures or functions described in embodiments of this application are generated. The computer may be a general-purpose computer, a special-purpose computer, a computer network, a network device, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a twisted pair) or wireless (for example, infrared, or microwave) manner. The computer-readable storage medium may be any medium accessible by a computer, or a data storage device, for example, a server or a data center, integrating one or more media. The medium may be a magnetic medium (for example, a floppy disk, a hard disk, or a magnetic tape), an optical medium (for example, an optical disc), a semiconductor medium (for example, a solid-state drive (SSD)), or the like.

According to another aspect of this application, a computer-readable storage medium is provided. The computer-readable storage medium includes computer instructions. When the computer instructions are run by a device, the device is enabled to perform the steps of the host in the channel-associated information transfer method provided in the foregoing method embodiments.

According to another aspect of this application, a computer-readable storage medium is provided. The computer-readable storage medium includes computer instructions. When the computer instructions are run by a device, the device is enabled to perform the steps of the UFS device in the channel-associated information transfer method provided in the foregoing method embodiments.

According to another aspect of this application, a computer program product including instructions is provided. When the computer program product runs on a computer, the computer is enabled to perform the steps performed by the host in the channel-associated information transfer method provided in the foregoing method embodiments.

According to another aspect of this application, a computer program product including instructions is provided. When the computer program product runs on a computer, the computer is enabled to perform the steps of the UFS device in the channel-associated information transfer provided in the foregoing method embodiments.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A channel-associated information transfer method, wherein the method comprises:
receiving, by a host, a first ready-to-transfer frame from a universal flash storage UFS device, wherein the first ready-to-transfer frame indicates to transfer first target data, the first ready-to-transfer frame comprises channel-associated control information, and the channel-associated control information is used to control transfer of first channel-associated information of the first target data; and
sending, by the host, a first data frame to the UFS device, wherein the first data frame comprises the first target data and the first channel-associated information.

2. The method according to claim 1, wherein the method further comprises:
sending, by the host, a write command frame to the UFS device, wherein the write command frame is used to request to write the first target data, and the write command frame comprises the channel-associated control information; and
receiving, by the host, a response frame from the UFS device, wherein the response frame is used to respond to the write command frame.

3. The method according to claim 2, wherein the write command frame is further used to request to write second target data, and the method further comprises:
receiving, by the host, a second ready-to-transfer frame from the UFS device, wherein the second ready-to-transfer frame indicates to transfer the second target data, the second ready-to-transfer frame comprises the channel-associated control information, and the channel-associated control information is further used to control transfer of second channel-associated information of the second target data; and
sending, by the host, a second data frame to the UFS device, wherein the second data information frame comprises the second target data and the second channel-associated information.

4. The method according to any one of claims 1 to 3, wherein the frame comprises a frame header, and the channel-associated control information is carried in a reserved field in the frame header; and the data frame further comprises a frame trailer, and the target data and the channel-associated information are carried in the frame trailer.

5. The method according to claim 4, wherein a length of the reserved field is two bytes.

6. The method according to any one of claims 1 to 5, wherein the target data comprises at least one data block, the channel-associated information comprises at least one channel-associated information block, and the at least one data block one-to-one corresponds to the at least one channel-associated information block, wherein
the channel-associated control information indicates at least one of the following information: a granularity of the data block, a granularity of the channel-associated information block, and an arrangement manner of the data block and the channel-associated information block.

7. The method according to claim 6, wherein the arrangement manner of the data block and the channel-associated information block is one of the following: a plurality of data blocks plus a plurality of channel-associated information blocks, a plurality of channel-associated information blocks plus a plurality of data blocks, a single data block plus a single channel-associated information block, and a single channel-associated information block plus a single data block.

8. A channel-associated information transfer method, wherein the method comprises:
sending, by a universal flash storage UFS device, a first ready-to-transfer frame to a host, wherein the first ready-to-transfer frame indicates to transfer first target data, the first ready-to-transfer frame comprises channel-associated control information, and the channel-associated control information is used to control transfer of first channel-associated information of the first target data; and
receiving, by the UFS device, a first data frame from the host, wherein the first data frame comprises the first target data and the first channel-associated information.

9. The method according to claim 8, wherein the method further comprises:
receiving, by the UFS device, a write command frame from the host, wherein the write command frame is used to request to write the first target data, and the write command frame comprises the channel-associated control information; and
sending, by the UFS device, a response frame to the host, wherein the response frame is used to respond to the write command frame.

10. The method according to claim 9, wherein the write command frame is further used to request to write second target data, and the method further comprises:
sending, by the UFS device, a second ready-to-transfer frame to the host, wherein the second ready-to-transfer frame indicates to transfer the second target data, the second ready-to-transfer frame comprises the channel-associated control information, and the channel-associated control information is further used to control transfer of second channel-associated information of the second target data; and
receiving, by the UFS device, a second data frame from the host, wherein the second data information frame comprises the second target data and the second channel-associated information.

11. The method according to any one of claims 8 to 10, wherein the frame comprises a frame header, and the channel-associated control information is carried in a reserved field in the frame header; and the data frame further comprises a frame trailer, and the target data and the channel-associated information are carried in the frame trailer.

12. The method according to claim 11, wherein a length of the reserved field is two bytes.

13. The method according to any one of claims 8 to 12, wherein the target data comprises at least one data block, the channel-associated information comprises at least one channel-associated information block, and the at least one data block one-to-one corresponds to the at least one channel-associated information block, wherein
the channel-associated control information indicates at least one of the following information: a granularity of the data block, a granularity of the channel-associated information block, and an arrangement manner of the data block and the channel-associated information block.

14. The method according to claim 13, wherein the arrangement manner of the data block and the channel-associated information block is one of the following: a plurality of data blocks plus a plurality of channel-associated information blocks, a plurality of channel-associated information blocks plus a plurality of data blocks, a single data block plus a single channel-associated information block, and a single channel-associated information block plus a single data block.

15. A channel-associated information transfer apparatus, wherein the apparatus comprises:
a receiving unit, configured to receive a first ready-to-transfer frame from a universal flash storage UFS device, wherein the first ready-to-transfer frame indicates to transfer first target data, the first ready-to-transfer frame comprises channel-associated control information, and the channel-associated control information is used to control transfer of first channel-associated information of the first target data; and
a sending unit, configured to send a first data frame to the UFS device, wherein the first data frame comprises the first target data and the first channel-associated information.

16. The apparatus according to claim 15, wherein
the sending unit is further configured to send a write command frame to the UFS device, wherein the write command frame is used to request to write the first target data, and the write command frame comprises the channel-associated control information; and
the receiving unit is further configured to receive a response frame from the UFS device, wherein the response frame is used to respond to the write command frame.

17. The apparatus according to claim 16, wherein the write command frame is further used to request to write second target data;
the receiving unit is further configured to receive a second ready-to-transfer frame from the UFS device, wherein the second ready-to-transfer frame indicates to transfer the second target data, the second ready-to-transfer frame comprises the channel-associated control information, and the channel-associated control information is further used to control transfer of second channel-associated information of the second target data; and
the sending unit is further configured to send a second data frame to the UFS device, wherein the second data information frame comprises the second target data and the second channel-associated information.

18. The apparatus according to any one of claims 15 to 17, wherein the frame comprises a frame header, and the channel-associated control information is carried in a reserved field in the frame header; and the data frame further comprises a frame trailer, and the target data and the channel-associated information are carried in the frame trailer.

19. The apparatus according to claim 18, wherein a length of the reserved field is two bytes.

20. The apparatus according to any one of claims 15 to 19, wherein the target data comprises at least one data block, the channel-associated information comprises at least one channel-associated information block, and the at least one data block one-to-one corresponds to the at least one channel-associated information block, wherein
the channel-associated control information indicates at least one of the following information: a granularity of the data block, a granularity of the channel-associated information block, and an arrangement manner of the data block and the channel-associated information block.

21. The apparatus according to claim 20, wherein the arrangement manner of the data block and the channel-associated information block is one of the following: a plurality of data blocks plus a plurality of channel-associated information blocks, a plurality of channel-associated information blocks plus a plurality of data blocks, a single data block plus a single channel-associated information block, and a single channel-associated information block plus a single data block.

22. A channel-associated information transfer apparatus, wherein the apparatus comprises:
a sending unit, configured to send a first ready-to-transfer frame to a host, wherein the first ready-to-transfer frame indicates to transfer first target data, the first ready-to-transfer frame comprises channel-associated control information, and the channel-associated control information is used to control transfer of first channel-associated information of the first target data; and
a receiving unit, configured to receive a first data frame from the host, wherein the first data frame comprises the first target data and the first channel-associated information.

23. The apparatus according to claim 22, wherein
the receiving unit is further configured to receive a write command frame from the host, wherein the write command frame is used to request to write the first target data, and the write command frame comprises the channel-associated control information; and
the sending unit is further configured to send the first ready-to-transfer frame to the host, wherein the first ready-to-transfer frame indicates to transfer the first target data, and the first ready-to-transfer frame comprises the channel-associated control information.

24. The apparatus according to claim 23, wherein the write command frame is further used to request to write second target data;
the sending unit is further configured to send a second ready-to-transfer frame to the host, wherein the second ready-to-transfer frame indicates to transfer the second target data, the second ready-to-transfer frame comprises the channel-associated control information, and the channel-associated control information is further used to control transfer of second channel-associated information of the second target data; and
the receiving unit is further configured to receive a second data frame from the host, wherein the second data information frame comprises the second target data and the second channel-associated information.

25. The apparatus according to any one of claims 22 to 24, wherein the frame comprises a frame header, and the channel-associated control information is carried in a reserved field in the frame header; and the data frame further comprises a frame trailer, and the target data and the channel-associated information are carried in the frame trailer.

26. The apparatus according to claim 25, wherein a length of the reserved field is two bytes.

27. The apparatus according to any one of claims 22 to 26, wherein the target data comprises at least one data block, the channel-associated information comprises at least one channel-associated information block, and the at least one data block one-to-one corresponds to the at least one channel-associated information block, wherein
the channel-associated control information indicates at least one of the following information: a granularity of the data block, a granularity of the channel-associated information block, and an arrangement manner of the data block and the channel-associated information block.

28. The apparatus according to claim 27, wherein the arrangement manner of the data block and the channel-associated information block is one of the following: a plurality of data blocks plus a plurality of channel-associated information blocks, a plurality of channel-associated information blocks plus a plurality of data blocks, a single data block plus a single channel-associated information block, and a single channel-associated information block plus a single data block.

29. A channel-associated information transfer apparatus, wherein the information transfer apparatus comprises a processor and a memory, the memory stores instructions, and when the processor runs the instructions, the apparatus is enabled to perform the channel-associated information transfer method according to any one of claims 1 to 7.

30. A channel-associated information transfer apparatus, wherein the information transfer apparatus comprises a processor and a memory, the memory stores instructions, and when the processor runs the instructions, the apparatus is enabled to perform the channel-associated information transfer method according to any one of claims 8 to 14.

31. An electronic device, wherein the electronic device comprises a host and a UFS device that are coupled to each other, the host comprises the channel-associated information transfer apparatus according to any one of claims 15 to 21 or claim 29, and the UFS device comprises the channel-associated information transfer apparatus according to any one of claims 22 to 28 or claim 30.

32. A computer-readable storage medium, wherein the computer-readable storage medium stores instructions, and when the instructions are executed by a device, the device is enabled to perform the channel-associated information transfer method according to any one of claims 1 to 14.
